# EUROPEAN PATENT APPLICATION

(11) **EP 2 869 576 A1**
(43) Date of publication of application: **06.05.2015**
(21) Application number: 14186473.6
(22) Date of filing: 25.09.2014
(51) Int. Cl.: H04N 19/109, H04N 19/114, H04N 19/164, H04N 19/166, H04N 19/192, H04N 19/30, H04N 19/44, H04N 19/46, H04N 19/503

(54) **Dynamic video encoding based on channel quality**

(30) Priority: 30.10.2013 US 201314067467
(71) Applicant: Intel IP Corporation, Santa Clara, CA 95054 (US)
(72) Inventor: Bracha, Vered Bar, 45201 Hod Hasharon (IL); Abiri, Roni, 43728 Raanana (IL); Somayazulu, Vallabhajosyula S., Portland, OR 97229 (US); Azogui, Tal, 49527 Petach Tikva (IL)
(74) Representative: Jansen, Cornelis Marinus

(57) **Abstract**

Various embodiments are generally directed to techniques to dynamically encode video based on channel quality and received video quality. An apparatus for dynamically encoding video includes a processor component; and a dynamic video encoder for execution by the processor component, the dynamic video encoder comprising a reference map generator to generate a reference map based on a channel quality corresponding to a plurality of encoded video frames to be transmitted over a channel, the reference map including indications of relationships between a plurality of video frames for purposes of encoding the plurality of video frames as the plurality of encoded video frames to increase a visual quality of the plurality of encoded video frames when transmitted over the channel and decoded.

## Description

### TECHNICAL FIELD

Embodiments described herein generally relate to increasing the visual quality of encoded video transmitted over a channel by dynamically generating a reference map to use for encoding the video.

### BACKGROUND

Digital video may be compressed prior to being transmitted from a transmitter, or source, of the digital video to a receiver of the digital video. As will be appreciated, a variety of different encoding techniques and encoding standards, each with their own level of compression, exist. In general, however, the greater the compression, the more sensitive the transmission is to losses. For example, a highly compressed digital video will be more sensitive to packet loss than an uncompressed digital video or a lesser-compressed digital video. The effects of packet loss on compressed digital video may be manifest as visible artifacts (e.g., frozen frames or blocks, black frames, blurring, ghosting, missing pixels, jerkiness, etc.). Additionally, digital video encoded using temporal coding techniques (e.g., I, P, B, frames, etc.) are even more sensitive to losses due to the fact that decoding a particular frame often requires data from previous or previous and future frames. As such, the loss of a single packet may result in visible artifacts beyond a single frame. In extreme cases, all frames that rely on the lost packet may be frozen until a complete refresh frame is received.

As will be appreciated, uncompressed video may be too large to transmit over some transmission channels (e.g., wireless channels). As such, the robustness of the compressed video to losses and the quality of the compressed video are often balanced based on *a-priori* knowledge. Due to changing conditions of the channel over which the video is transmitted, this may not result in increased robustness, and also the quality may needlessly be reduced. Furthermore, the channel resources may not be efficiently utilized.

Thus, there is a need to provide for the dynamic adaptation of encoding of video that is transmitted over a channel to increase the quality of the video at a receiver.

### BRIEF DESCRIPTION OF THE DRAWINGS

**FIG. 1** illustrates an embodiment of a dynamic video encoding and decoding system.
**FIGS. 2-3** each illustrate a portion of an embodiment of the dynamic video encoding and decoding system.
**FIGS. 4 - 7** each illustrates examples of reference maps according to an embodiment.
**FIGS. 8 - 9** each illustrates a logic flow according to an embodiment.
**FIG. 10** illustrates a processing architecture according to an embodiment.

### DETAILED DESCRIPTION

Various embodiments are generally directed to techniques to dynamically encode video based on a reference map. The reference map is generated based on data indicating a quality of the channel over which the encoded video is to be transmitted as well as visual quality of the video. During transmission of the encoded video (e.g., periodically, at set intervals, upon a detected change, etc.) the reference map may be regenerated in order to increase the quality of the video and take into account changed channel quality data.

As will be appreciated, video is often encoded before being transmitted over a channel (e.g., wireless, wired, etc.) In many cases, the encoding includes compression of the video to facilitate transmitting the video over the bandwidth corresponding to the channel. The quality of the video once transmitted over the channel (e.g., as received and decoded at a receiver) depends upon the encoding as well as the channel. For example, high levels of compression may lead to decreased quality of the video. As another example, high packet loss during transmission over the channel may also lead to decreased quality of video. Accordingly, the present disclosure provides for dynamically encoding video based on a reference map that is updated to account for changing channel conditions

With general reference to notations and nomenclature used herein, portions of the detailed description that follow may be presented in terms of program procedures executed on a computer or network of computers. These procedural descriptions and representations are used by those skilled in the art to most effectively convey the substance of their work to others skilled in the art. A procedure is here, and generally, conceived to be a self-consistent sequence of operations leading to a desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Further, these manipulations are often referred to in terms, such as adding or comparing, which are commonly associated with mental operations performed by a human operator. However, no such capability of a human operator is necessary, or desirable in most cases, in any of the operations described herein that form part of one or more embodiments. Rather, these operations are machine operations. Useful machines for performing operations of various embodiments include general purpose digital computers as selectively activated or configured by a computer program stored within that is written in accordance with the teachings herein, and/or include apparatus specially constructed for the required purpose. Various embodiments also relate to apparatus or systems for performing these operations. These apparatus may be specially constructed for the required purpose or may include a general purpose computer. The required structure for a variety of these machines will be apparent from the description given.

Reference is now made to the drawings, wherein like reference numerals are used to refer to like elements throughout. In the following description, for purposes of explanation, numerous specific details are set forth in order to provide a thorough understanding thereof. It may be evident, however, that the novel embodiments can be practiced without these specific details. In other instances, well known structures and devices are shown in block diagram form in order to facilitate a description thereof. The intention is to cover all modifications, equivalents, and alternatives within the scope of the claims.

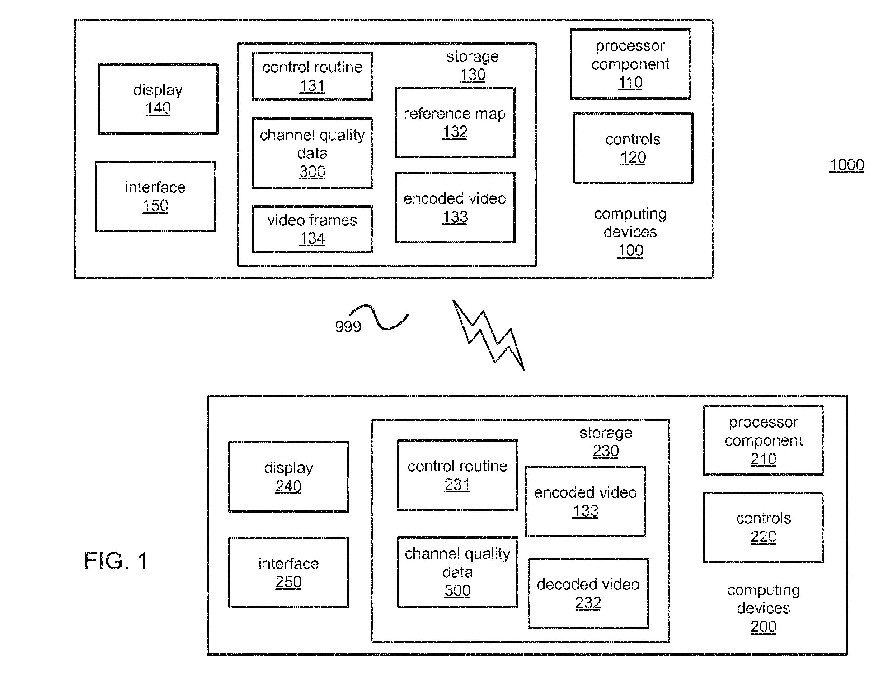

**FIG. 1** is a block diagram of an embodiment of a dynamic video encoding and decoding system 1000 incorporating a computing device 100 and a computing device 200. Each of these computing devices may be any of a variety of types of computing devices, including without limitation, a desktop computer system, a data entry terminal, a laptop computer, a netbook computer, a tablet computer, a handheld personal data assistant, a smartphone, a digital camera, a body-worn computing device incorporated into clothing or wearable accessories (e.g., glasses, a watch, etc.,) a computing device integrated into a vehicle (e.g., a car, a bicycle, a wheelchair, etc.), a server, a cluster of servers, a server farm, a station, a wireless station, user equipment, and so forth. Furthermore, the computing device 100 may be any of a variety of types of display devices not traditionally thought of as "computers," including without limitation, a DVD player, a portable video player, a console video game system, a television receiver, a video content streaming device, and so forth. Embodiments are not limited in this context.

As depicted, the computing devices 100 and 200 exchange signals conveying encoded video and/or channel quality data through network 999. One or more of these computing devices, however, may exchange other data entirely unrelated to encoded video and/or quality information with each other and/or with still other computing devices (not shown) via the network 999. In various embodiments, the network 999 may be a single network possibly limited to extending within a single building or other relatively limited area, a combination of connected networks possibly extending a considerable distance, and/or may include the Internet. Thus, the network 999 may be based on any of a variety (or combination) of communications technologies by which signals may be exchanged, including without limitation, wired technologies employing electrically and/or optically conductive cabling, and wireless technologies employing infrared, radio frequency or other forms of wireless transmission. Furthermore, although the network 999 is shown as a wireless network, it may in some examples be a wired network.

It should be noted that although a single computing devices (e.g., the computing device 100) is described for encoding and transmitting video while a single computing device (e.g., the computing device 200) is described for receiving and decoding video, the features of each individual computing device may be incorporated into both computing devices such that either computing device may encode, transmit, receive and decode video according to the present disclosure. As such, the computing devices 100 and 200 may, for example, be used to facilitate a video call between users of the computing devices. As a particularly illustrative example, the computing devices 100 and 200 may be smart phones operating on the network 999. The smart phones may be used to engage in a video call between users of the smart phones.

In various embodiments, the computing device 100 incorporates one or more of a processor component 110, controls 120, storage 130, a display 140, and an interface 150 to couple the computing device 100 to the network 999. The storage 130 stores one or more of a control routine 131, channel quality data 300, a reference map 132, encoded video frames 133, and video frames 134. In various embodiments, the computing device 200 incorporates one or more of a processor component 210, controls 220, storage 230, a display 240, and an interface 250 to couple the computing device 200 to the network 999. The storage 230 stores one or more of a control routine 231, the channel quality data 300, the encoded video frames 133, and decoded video frames 232.

It should be noted, that although both the storage 130 and 230 are shown including channel quality data 300, the channel quality data 300 stored in each of the storage 130 and 230 may not be the same channel quality data and/or may include portions of the channel quality data. Furthermore, where the storage 130 and 230 include portions of the channel quality data, the included portions may not be the same.

In the computing device 100, the control routine 131 incorporates a sequence of instructions operative on the processor component 110 in its role as either a main processor component or a graphics processing unit to implement logic to perform various functions. In executing the control routine 131, the processor component 110 generates some portions of the channel quality data 300 as the computing device 100 encodes video. The generated portions of the channel quality data 300 may include indications of the visual quality of the encoded video frames, as measured at the computing device 100 prior to being transmitted over the channel 999. The control routine 131 may implement any of a variety of techniques for measuring visual quality of encoded video frames.

As will be explained in greater detail below, the visual quality measured at the computing device 100 may correspond to a base level of quality. Furthermore, as will be explained in greater detail below, the channel quality data 300 may include portions generated by the computing device 200.

Additionally, in executing the control routine 131, the processor component 110 generates a reference map 132 based on the channel quality data 300. As explained in greater detail below, the reference map 132 includes indications of relationships between individual ones of the video frames 134 for purposes of encoding. Said differently, the reference map 132 defines relationships as I, P, and B frames of the video. In some examples, the relationships may be hierarchical. Furthermore, as will be explained in greater detail below, the reference map may by dynamically updated (e.g., based on changing channel quality data.)

Additionally, in executing the control routine 131, the processor component encodes the video frames 134 based on the reference map, resulting in the encoded video frames 133. The control routine 131 may implement any of a variety of encoding techniques and/or algorithms to encode the video. For example, without limitation, the h.264 codec, the VC1 coded by Microsoft®, the VP8 codec by Google®, or otherwise any encoding scheme or codec for digital video may be employed.

Furthermore, in executing the control routine 131, the processor component 110 may transmit the encoded video frames 133 to the computing device 200 over the channel 999.

In the computing device 200, the control routine 231 incorporates a sequence of instructions operative on the processor component 210 in its role as either a main processor component or a graphics processing unit to implement logic to perform various functions. In executing the control routine 231, the processor component 210 receives the encoded video frames 133 from the computing device 100.

Additionally, in executing the control routine 231, the processor component 210 may decode the encoded video frames 133 and save the decoded video as the decoded video frames 232. Furthermore, in executing the control routine 231, the processor component 210 may cause the display to display the decoded video frames 232.

Furthermore, in executing the control routine 231, the processor component 210 generates some portions of the channel quality data 300. The generated portions of the channel quality data 300 may include indications of the visual quality of the decoded video frames, as measured at the computing device 200 after being received over the channel 999. The control routine 231 may implement any of a variety of techniques for measuring visual quality of decoded video frames. As will be explained in greater detail below, the visual quality measured at the computing device 200 may correspond to a received level of quality. Furthermore, as will be explained in greater detail below, the generated portions of the channel quality data 300 may include indications of the network quality corresponding to the channel 999. The control routine 131 may implement any of a variety of network quality measures to generate the indications of the network quality of the channel 999.

Additionally, in executing the control routine 231, the processor component 210 may transmit the generated portions of the channel quality data to the computing device 100 for purposes of generating the reference map based on "end-to-end" channel quality measurements.

It is important to note, that the examples provided herein may be used to increase the quality of "streaming" digital video by dynamically generating and/or updating the reference map based on changing channel condition data. As such, the encoding may change to balance the quality of video against the current channel quality data.

In various embodiments, each of the processor components 110 and 210 may include any of a wide variety of commercially available processor components such as, for example, central processing units, graphics processing units, or otherwise any processing unit. Further, one or more of these processor components may include multiple processors, a multi-threaded processor, a multi-core processor (whether the multiple cores coexist on the same or separate dies), and/or a multi-processor architecture of some other variety by which multiple physically separate processors are in some way linked.

In various embodiments, each of the storages 130 and 230 may be based on any of a wide variety of information storage technologies, possibly including volatile technologies requiring the uninterrupted provision of electric power, and possibly including technologies entailing the use of machine-readable storage media that may or may not be removable. Thus, each of these storages may include any of a wide variety of types (or combination of types) of storage device, including without limitation, read-only memory (ROM), random-access memory (RAM), dynamic RAM (DRAM), Double-Data-Rate DRAM (DDR-DRAM), synchronous DRAM (SDRAM), static RAM (SRAM), programmable ROM (PROM), erasable programmable ROM (EPROM), electrically erasable programmable ROM (EEPROM), flash memory, polymer memory (e.g., ferroelectric polymer memory), ovonic memory, phase change or ferroelectric memory, silicon-oxide-nitride-oxide-silicon (SONOS) memory, magnetic or optical cards, one or more individual ferromagnetic disk drives, or a plurality of storage devices organized into one or more arrays (e.g., multiple ferromagnetic disk drives organized into a Redundant Array of Independent Disks array, or RAID array). It should be noted that although each of these storages is depicted as a single block, one or more of these may include multiple storage devices that may be based on differing storage technologies. Thus, for example, one or more of each of these depicted storages may represent a combination of an optical drive or flash memory card reader by which programs and/or data may be stored and conveyed on some form of machine-readable storage media, a ferromagnetic disk drive to store programs and/or data locally for a relatively extended period, and one or more volatile solid state memory devices enabling relatively quick access to programs and/or data (e.g., SRAM or DRAM). It should also be noted that each of these storages may be made up of multiple storage components based on identical storage technology, but which may be maintained separately as a result of specialization in use (e.g., some DRAM devices employed as a main storage while other DRAM devices employed as a distinct frame buffer of a graphics controller).

In various embodiments, each of the interfaces 150 and 250 may employ any of a wide variety of signaling technologies enabling computing devices to be coupled to other devices as has been described. Each of these interfaces may include circuitry providing at least some of the requisite functionality to enable such coupling. However, each of these interfaces may also be at least partially implemented with sequences of instructions executed by corresponding ones of the processor components (e.g., to implement a protocol stack or other features). Where electrically and/or optically conductive cabling is employed, these interfaces may employ signaling and/or protocols conforming to any of a variety of industry standards, including without limitation, RS-232C, RS-422, USB, Ethernet (IEEE-802.3) or IEEE-1394. Where the use of wireless signal transmission is entailed, these interfaces may employ signaling and/or protocols conforming to any of a variety of industry standards, including without limitation, IEEE 802.11a, 802.11b, 802.11g, 802.16, 802.20 (commonly referred to as "Mobile Broadband Wireless Access"); Bluetooth; ZigBee; or a cellular radiotelephone service such as GSM with General Packet Radio Service (GSM/GPRS), CDMA/1xRTT, Enhanced Data Rates for Global Evolution (EDGE), Evolution Data Only/Optimized (EV-DO), Evolution For Data and Voice (EV-DV), High Speed Downlink Packet Access (HSDPA), High Speed Uplink Packet Access (HSUPA), 4G LTE, etc.

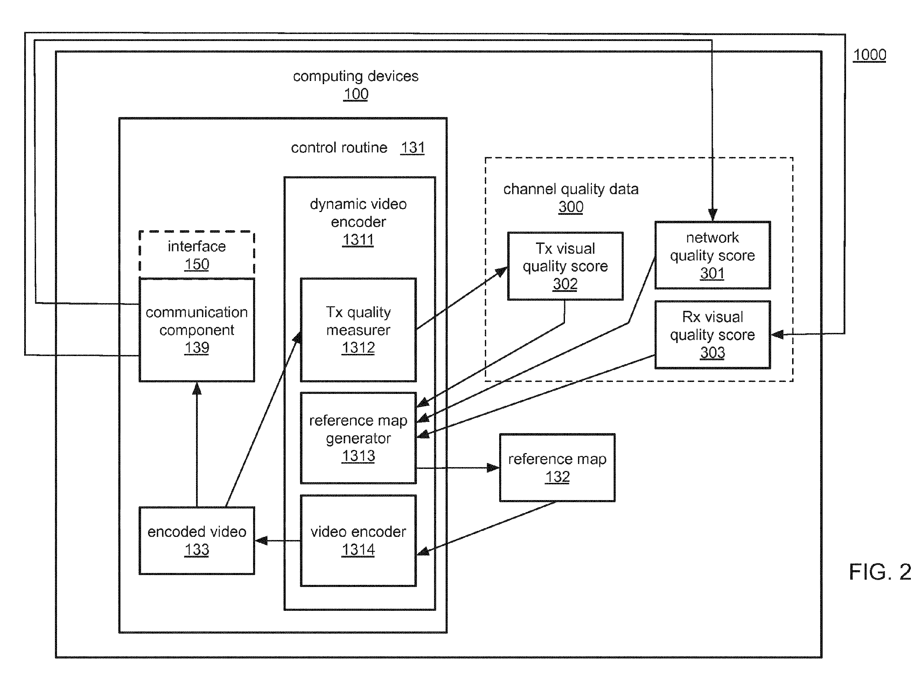

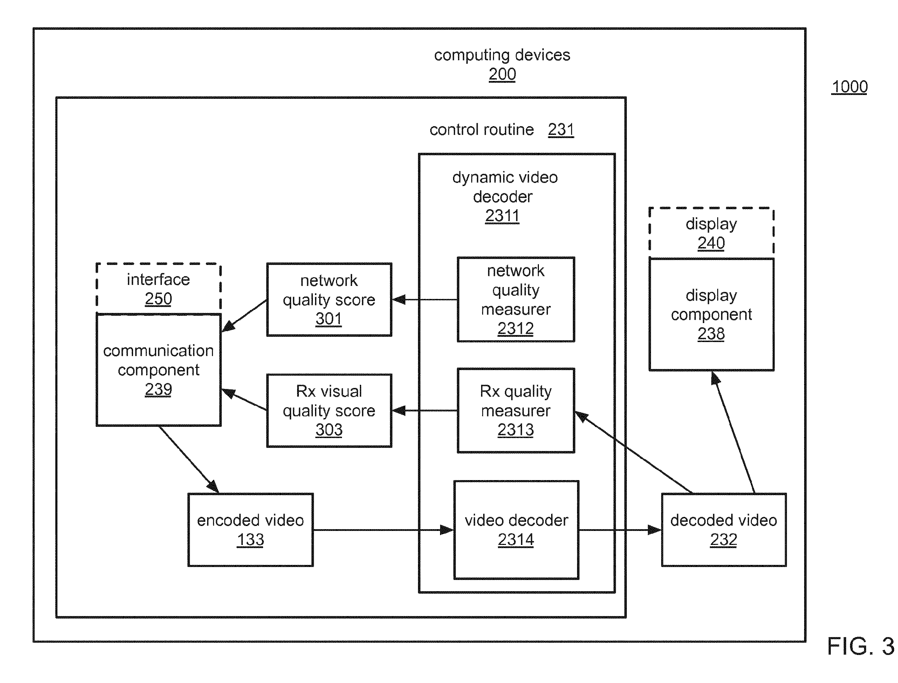

**FIG. 2** is a simplified block diagram of a portion of an embodiment of the dynamic video encoding and decoding system 1000 of **FIG. 1****.** Each of these figures depicts aspects of the operation of generating a reference map, encoding video based on the reference map, decoding video, and generating channel quality data upon which the reference map may be generated. More specifically, **FIG. 2** depicts aspects of the operation of generating portions of the channel quality data, generating the reference map, and encoding video. **FIG. 3** depicts aspects of the operation of decoding encoded video and generating portions of the channel quality data.

In various embodiments, each of the control routines 131 and 231 may include one or more of an operating system, device drivers and/or application-level routines (e.g., so-called "software suites" provided on disc media, "applets" obtained from a remote server, etc.). Where an operating system is included, the operating system may be any of a variety of available operating systems appropriate for whatever corresponding ones of the processor components 110 or 210. Where one or more device drivers are included, those device drivers may provide support for any of a variety of other components, whether hardware or software components, of corresponding ones of the computer systems 100 or 200.

Each of the control routines 131 and 231 may include or be otherwise linked to communications components 139 and 239 executable by the processor components 110 and 210 to operate the interfaces 190 and 290, respectively, to transmit and receive signals via the network 999 as has been described. Among the signals received may be signals conveying the encoded video frames 133 and/or the channel quality data 300. As familiar to those skilled in the art, each of these communications components is selected to be operable with whatever type of interface technology is selected to implement corresponding ones of the interfaces 190 and 290.

Additionally, control routine 231 may include or be otherwise linked to display component 238 executable by the processor component 210 to operate the display 240 to display the decoded video frames 232.

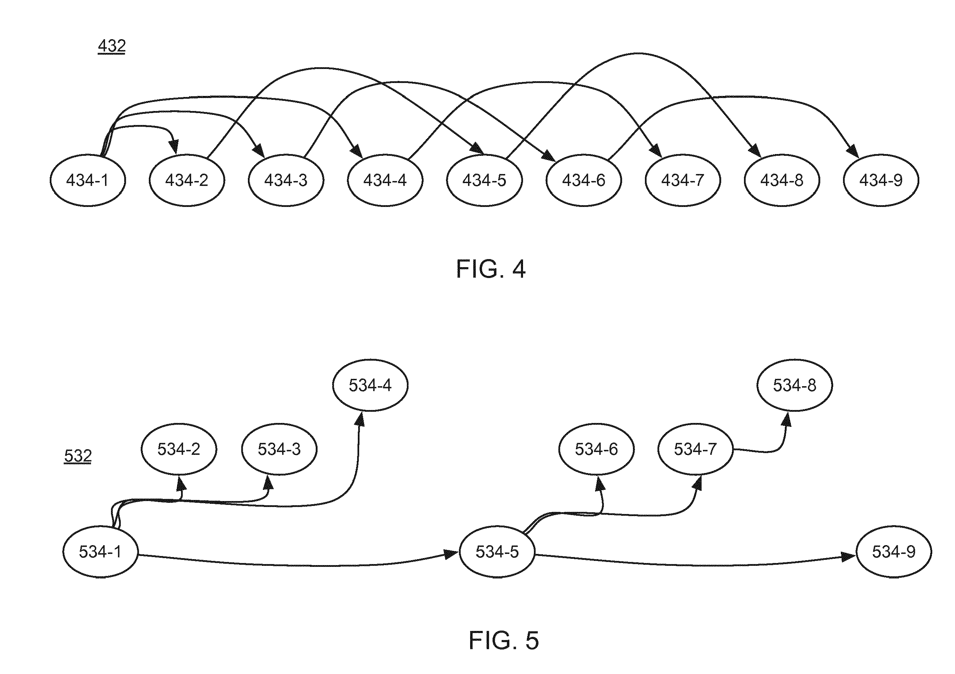

Turning more specifically to **FIG. 2****,** a dynamic video encoder 1311 of the control routine 131 includes a transmitter (Tx) quality measurer 1312, a reference map generator 1313, and a video encoder 1314. The reference map generator 1313 generates indications of relationships between frames of a digital video for encoding purposes and stores the indications as the reference map 132. Example reference maps are described with respect to **FIGS. 4 - 7****.** In general, however, as introduced above, the reference map defines the relationships between the frames of the digital video for purposes of encoding the digital video. As stated above, the reference map may be generated multiple times. It is important to note, that initially, the reference map may be generated based on a desired level of quality, known network conditions of the channel 999, or portions of the channel quality data received from the computing device 200.

The video encoder 1314 encodes the video frames 134 based on the reference map and stores the encoded video frames as the encoded video frames 133. It is to be appreciated that the computing device 100 may receive the video frames 134 from any of a variety of sources (e.g., the storage 130, another storage that is not shown, another computing device that is also not shown but that is connected to the computing device 100 over the channel 999 or another network.)

The transmitter (Tx) quality measurer 1312 generates portions of the channel quality data 300 including indications of the quality of the encoded video frames 133 and stores these indications as a transmitter (Tx) visual quality score 302. In some examples, the transmitter (Tx) visual quality score 302 is based on the visible artifacts due to the compression method used by the video encoder 1314, and takes into account bandwidth emitted for transport overhead and forward error correction, as well as encoder configurations such as slice size, quantization parameters, GoP structure, frame rate, resolution, etc.

Turning now to **FIG. 3****,** a dynamic video decoder 2311 of the control routine 231 includes a network quality measurer 2312, a receiver (Rx) quality measurer 2313, and a video decoder 2314.

The network quality measurer 2312 generates portions of the channel quality data 300 including indications of the network quality of channel 999 and stores these indications as a network quality score 301. In some examples, the network quality score may be based on various statistical network quality measurements and may take into account, bandwidth, congestion, packet loss, etc.

The video decoder 2314 decodes frames of the encoded video frames 133 and stores the decoded frames as the decoded video frames 232. The receiver (Rx) quality measurer 2313 generates portions of the channel quality data 300 including indications of the quality of the decoded video frames 232 and stores these indications as a receiver (Rx) visual quality score 234. In some examples, the receiver (Rx) visual quality score is based on the visible artifacts measured at the computing device 200 (e.g., the receiver) and include effect of delayed/loss packets carrying video data.

In some implementations, the reference map is available to the encoder but not the decoder. Decoding the video stream and which frames are dependent upon which frames is provided for natively by the different encoding techniques (e.g., H.264, etc.). In some cases, the decoder does not need to know about the reference map as each encoded frame specifies which frames are used to decode the frame. Furthermore, in some cases, the encoding codec and the codec used to decode the video stream are referenced by the file type.

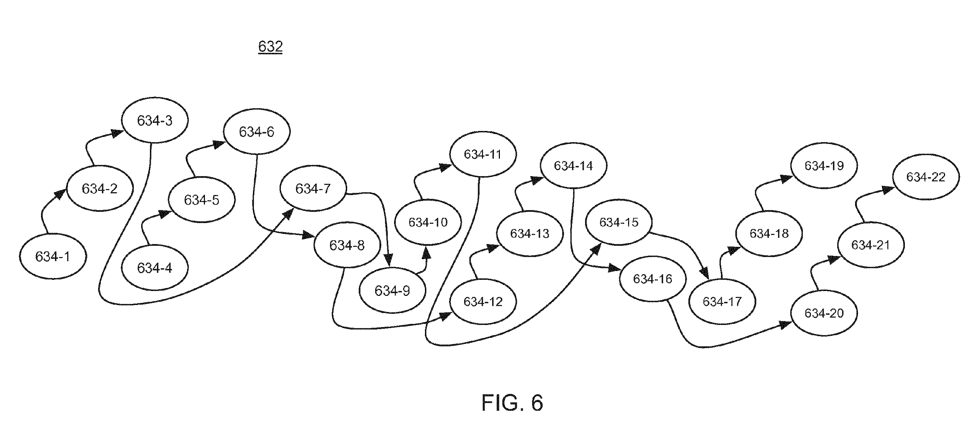

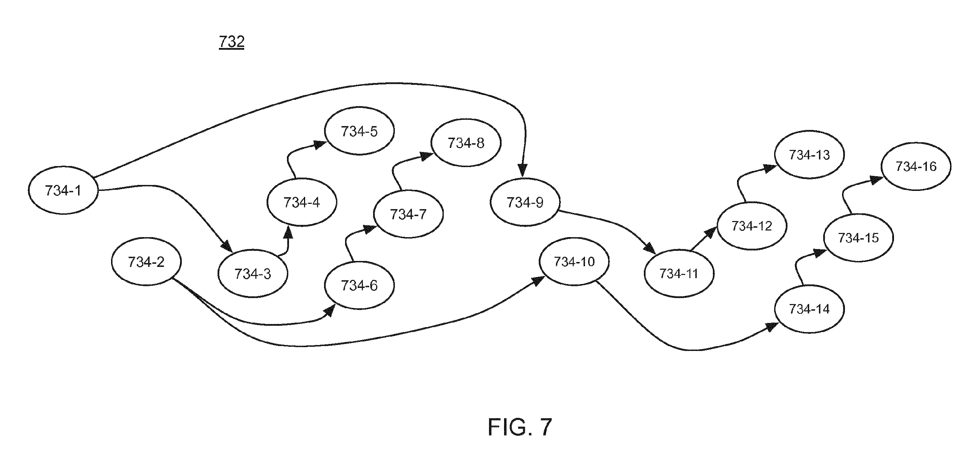

Each of **FIGS. 4 - 7** depicts various examples of the reference map 132, which defines relationships between the video frames 134. It is important to note that these reference map examples are provided for illustration only and are not intended to be limiting. Furthermore, in addition to defining the relationships between frames, the reference map may specify a particular type of encoding to be used. As described above, during operation, the reference map may be changed or otherwise updated. As such, the type of reference map and/or the type of encoding may change, for example, as channel quality data changes. In some examples, as the channel quality (e.g., as indicated by channel quality data 300) lowers, a more robust reference map may be generated. For example, without limitation, the hierarchical reference maps (e.g., refer to **FIG. 5** and FIG. **7**) may be more robust than the non-hierarchical reference maps, with the hierarchical pseudo-random inter predictive reference map (e.g., refer to **FIG. 7**) being more robust than the hierarchical dyadic reference map (e.g., refer to **FIG. 5**). Accordingly, the hierarchical reference maps may, in some examples, be selected when channel quality is lower. Furthermore, where channel quality is higher, a non-hierarchical reference map (e.g., refer to **FIG. 4** and **FIG. 6**) may be selected, with the progressive +1 reference map (e.g., refer to **FIG. 4**) being less robust but potentially offering better compression efficiency and quality than the pseudo-random reference map (e.g., refer to **FIG. 6**)**.**

Furthermore, as stated, some of the reference maps may incorporate hierarchical relationships between the frames. It is to be appreciated that a variety of hierarchical encoding techniques exist and can be used. In general, however, hierarchical video encoding includes organizing the frames into a base layer (BL), and one or more enhancement layers (EL) that bring additional information about quality, resolution or frame rate. The reference map 132 may utilize hierarchical encoding to increase/decrease the number of coding layers based on the channel quality data in an attempt to increase the quality of the video received by the computing device 200. Furthermore, as will be appreciated, hierarchical encoding may be particularly adapted for unequal error-protection because of its layer-based coding structure. The base layer is generally more important for the decoding process than the enhancement layers due to the dependency of other layers on it. Furthermore, the base layer generally represents a limited amount of data when compared to the enhancement layers. A more robust error protection technique (e.g., AL-FEC) can then be applied on the base layer, while the enhancement layers can be left unprotected, as the effect of losing enhancement layer frame data is only limited to time until next base layer frame is received.

Turning more specifically to **FIG. 4****,** a reference map 432 depicting progressive plus 1 (+1) encoding that defines relationships (e.g., indicated by solid lines) between video frames 434-1 to 434-9 is shown. As can be seen, the first video frame 434-1 corresponds to an initial video frame, sometimes referred to as an intra-coded frame. More particularly, the first video frame 434-1 will not require data from other frames to be decoded. Video frames 434-2 to 434-9, however, require data from prior frames to be decoded, sometimes referred to as P frames or predictive-coded frames. In general, the compression efficiency corresponding to progressive +1 encoding is lower as compared to a consecutive reference between video frames 434 due to the enforced double jump. However, progressive +1 encoding may provide better error resilience since only half of the bitrate is lost until a refresh (e.g., new I frame) is received. In some examples, the reference map generator 1313 may generate the reference map 132 based on a progressive +1 encoding to balance the visual quality based on channel quality data 300.

Turning more specifically to **FIG. 5****,** a hierarchical reference map 532 depicting dyadic reference encoding that defines relationships (e.g., indicated by solid lines) between video frames 534-1 to 534-9 is shown. As can be seen, video frames 534-1, 534-5, and 534-9 correspond base layer video frames, with video frame 534-1 being an initial video frame; video frames 534-2 to 534-3 and 534-6 to 534-7 correspond to first enhancement layer video frames while video frames 534-4 and 534-8 correspond to second enhancement layer video frames. In general, compression efficiency may be lower for the base layer frames (e.g., 534-5 and 534-9) compared to consecutive reference, yet this structure provides self-healing in case data related to one of the first enhancement layer frames is lost during transmission over the channel 999. Furthermore, this structure allows for uneven error protection schemes based on the importance of the frame loss (e.g., higher error protection for base layer, etc.) In some examples, the reference map generator 1313 may generate the reference map 132 based on dyadic encoding to balance the visual quality based on channel quality data 300.

Turning more specifically to **FIG. 6****,** a reference map 632 depicting pseudo-random encoding that defines relationships (e.g., indicated by solid lines) between video frames 634-1 to 634-22 is shown. Video frames 634-1 and 634-4 correspond to initial video frames. The other video frames (e.g., 634-2 to 634-3 and 634-5 to 634-22) correspond to predictive-coded video frames, with the relationship to either of the initial video frames 634-1 or 634-4 depicted by the solid lines. In general, a reference map using pseudo-random predictive encoding may have a similar effect to that of using an interleaved transmission. However, predicted latency for temporally sensitive information (e.g., live streaming video, video calls, etc.) may be maintained using the pseudo-random inter predictive encoding. In some examples, the reference map generator 1313 may generate the reference map 132 based on pseudo-random inter predictive encoding to balance the visual quality based on channel quality data 300.

Turning more specifically to **FIG. 7****,** a hierarchical reference map 732 depicting pseudo-random inter predictive encoding that defines relationships (e.g., indicated by solid lines) between video frames 734-1 to 734-16 is shown. Video frames 734-1 to 734-2 and 734-9 to 734-10 correspond base layer video frames, with video frames 734-1 and 734-2 being initial video frames; video frames 734-3, 734-6, 734-11, and 734-14 correspond to first enhancement layer video frames; video frames 734-4, 734-7, 734-12, and 734-15 correspond to second enhancement layer video frames; and video frames 734-5, 734-8, 734-13, and 734-16 correspond to third enhancement layer video frames. As will be appreciated, by introducing hierarchy to a pseudo-random reference map, the video transmission may be more robust and provide for increased visual quality in cases where data corresponding to one of the lower layer frames is lost. In some examples, the reference map generator 1313 may generate the reference map 132 based on pseudo-random inter predictive encoding to balance the visual quality based on channel quality data 300.

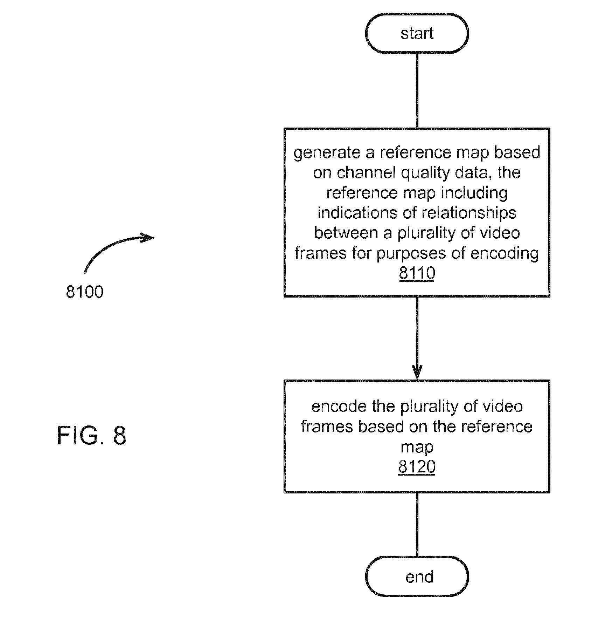

**FIG. 8** illustrates one embodiment of a logic flow 8100. The logic flow 8100 may be representative of some or all of the operations executed by one or more embodiments described herein. More specifically, the logic flow 8100 may illustrate operations performed by the processor component 110 in executing at least the control routine 131, and/or performed by other component(s) of the computing device 100.

At 8110, a processor component of a computing device of a dynamic video encoding and decoding system (e.g., the processor component 110 of the computing device 100 of the dynamic video encoding and decoding system 1000) is caused by execution of a dynamic video encoder of a control routine to generate a reference map based on a channel quality corresponding to a plurality of encoded video frames to be transmitted over a channel, the reference map including indications of relationships between a plurality of video frames for purposes of encoding the plurality of video frames as the plurality of encoded video frames to increase a visual quality of the plurality of encoded video frames when transmitted over the channel and decoded.

For example, the reference map generator 1313 of the dynamic video encoder 1311 of the control routine 131 may generate the reference map 132. Furthermore, in some examples, the reference map may be generated to define relationships between the video frames 134 based on various example reference maps presented herein (e.g., refer to **FIGS. 4 - 7**)**.** Additionally, in some examples, the reference map may be generated based at least in part on a network quality score, a transmitter visual quality score, and/or a receiver visual quality score.

At 8120, the processor component of the computing device of the dynamic video encoding and decoding system (e.g., the processor component 110 of the computing device 100 of the dynamic video encoding and decoding system 1000) is caused by execution of the dynamic video encoder to encode the plurality of video frames based on the reference map. For example, the video encoder 1314 of the dynamic video encoder 1311 of the control routine 131 may encode the plurality of video frames 134 based on the reference map 132 and save the encoded video frames as the encoded video frames 133.

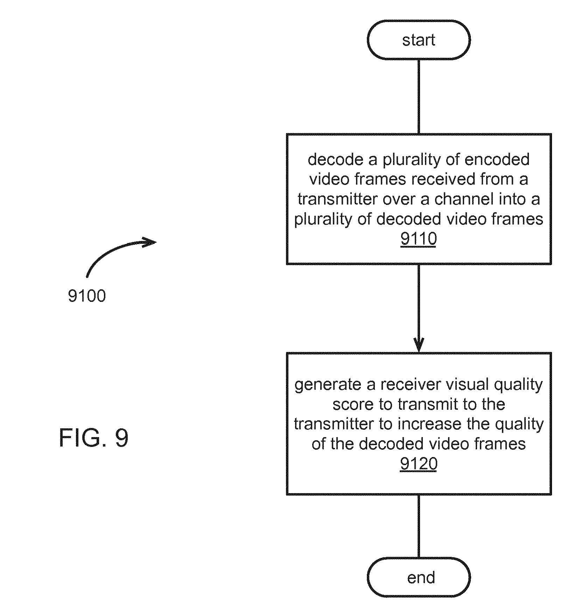

**FIG. 9** illustrates one embodiment of a logic flow 9100. The logic flow 9100 may be representative of some or all of the operations executed by one or more embodiments described herein. More specifically, the logic flow 9100 may illustrate operations performed by the processor component 210 in executing at least the control routine 231, and/or performed by other component(s) of the computing device 200.

At 9110, a processor component of a computing device of a dynamic video encoding and decoding system (e.g., the processor component 210 of the computing device 200 of the dynamic video encoding and decoding system 1000) is caused by execution of a dynamic video decoder of a control routine to decode a plurality of encoded video frames received from a transmitter over a channel into a plurality of decoded video frames. For example, the video decoder 2314 may decode the encoded video frames 133 into the decoded video frames 232.

At 9120, the processor component of the computing device of the dynamic video encoding and decoding system (e.g., the processor component 210 of the computing device 200 of the dynamic video encoding and decoding system 1000) is caused by execution of the dynamic video decoder of the control routine to generate a receiver visual quality score to transmit to the transmitter to increase the quality of the decoded video frames, the receiver visual quality score corresponding to the quality of the plurality of decoded video frames. For example, the receiver (Rx) quality measurer 2313 may generate the receiver (Rx) visual quality score 303.

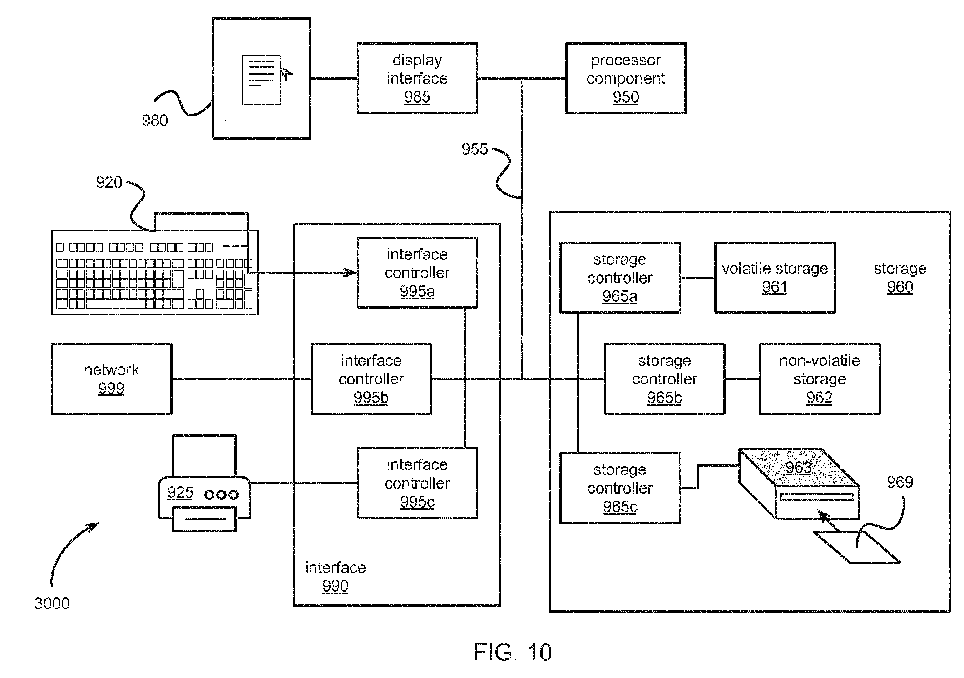

**FIG. 10** illustrates an embodiment of an exemplary processing architecture 3000 suitable for implementing various embodiments as previously described. More specifically, the processing architecture 3000 (or variants thereof) may be implemented as part of either or both of the computing devices 100 and 200.

The processing architecture 3000 may include various elements commonly employed in digital processing, including without limitation, one or more processors, multi-core processors, co-processors, memory units, chipsets, controllers, peripherals, interfaces, oscillators, timing devices, video cards, audio cards, multimedia input/output (I/O) components, power supplies, etc. As used in this application, the terms "system" and "component" are intended to refer to an entity of a computing device in which digital processing is carried out, that entity being hardware, a combination of hardware and software, software, or software in execution, examples of which are provided by this depicted exemplary processing architecture. For example, a component can be, but is not limited to being, a process running on a processor component, the processor component itself, a storage device (e.g., a hard disk drive, multiple storage drives in an array, etc.) that may employ an optical and/or magnetic storage medium, an software object, an executable sequence of instructions, a thread of execution, a program, and/or an entire computing device (e.g., an entire computer). By way of illustration, both an application running on a server and the server can be a component. One or more components can reside within a process and/or thread of execution, and a component can be localized on one computing device and/or distributed between two or more computing devices. Further, components may be communicatively coupled to each other by various types of communications media to coordinate operations. The coordination may involve the uni-directional or bidirectional exchange of information. For instance, the components may communicate information in the form of signals communicated over the communications media. The information can be implemented as signals allocated to one or more signal lines. A message (including a command, status, address or data message) may be one of such signals or may be a plurality of such signals, and may be transmitted either serially or substantially in parallel through any of a variety of connections and/or interfaces.

As depicted, in implementing the processing architecture 3000, a computing device may include at least a processor component 950, a storage 960, an interface 990 to other devices, and a coupling 955. As will be explained, depending on various aspects of a computing device implementing the processing architecture 3000, including its intended use and/or conditions of use, such a computing device may further include additional components, such as without limitation, a display interface 985.

The coupling 955 may include one or more buses, point-to-point interconnects, transceivers, buffers, crosspoint switches, and/or other conductors and/or logic that communicatively couples at least the processor component 950 to the storage 960. Coupling 955 may further couple the processor component 950 to one or more of the interface 990, the audio subsystem 970 and the display interface 985 (depending on which of these and/or other components are also present). With the processor component 950 being so coupled by couplings 955, the processor component 950 is able to perform the various ones of the tasks described at length, above, for whichever one(s) of the aforedescribed computing devices implement the processing architecture 3000. Coupling 955 may be implemented with any of a variety of technologies or combinations of technologies by which signals are optically and/or electrically conveyed. Further, at least portions of couplings 955 may employ timings and/or protocols conforming to any of a wide variety of industry standards, including without limitation, Accelerated Graphics Port (AGP), CardBus, Extended Industry Standard Architecture (E-ISA), Micro Channel Architecture (MCA), NuBus, Peripheral Component Interconnect (Extended) (PCI-X), PCI Express (PCI-E), Personal Computer Memory Card International Association (PCMCIA) bus, HyperTransport™, QuickPath, and the like.

As previously discussed, the processor component 950 (corresponding to the processor component 110 and/or 210) may include any of a wide variety of commercially available processors, employing any of a wide variety of technologies and implemented with one or more cores physically combined in any of a number of ways.

As previously discussed, the storage 960 (corresponding to the storage 130 and/or 230) may be made up of one or more distinct storage devices based on any of a wide variety of technologies or combinations of technologies. More specifically, as depicted, the storage 960 may include one or more of a volatile storage 961 (e.g., solid state storage based on one or more forms of RAM technology), a non-volatile storage 962 (e.g., solid state, ferromagnetic or other storage not requiring a constant provision of electric power to preserve their contents), and a removable media storage 963 (e.g., removable disc or solid state memory card storage by which information may be conveyed between computing devices). This depiction of the storage 960 as possibly including multiple distinct types of storage is in recognition of the commonplace use of more than one type of storage device in computing devices in which one type provides relatively rapid reading and writing capabilities enabling more rapid manipulation of data by the processor component 950 (but possibly using a "volatile" technology constantly requiring electric power) while another type provides relatively high density of non-volatile storage (but likely provides relatively slow reading and writing capabilities).

Given the often different characteristics of different storage devices employing different technologies, it is also commonplace for such different storage devices to be coupled to other portions of a computing device through different storage controllers coupled to their differing storage devices through different interfaces. By way of example, where the volatile storage 961 is present and is based on RAM technology, the volatile storage 961 may be communicatively coupled to coupling 955 through a storage controller 965a providing an appropriate interface to the volatile storage 961 that perhaps employs row and column addressing, and where the storage controller 965a may perform row refreshing and/or other maintenance tasks to aid in preserving information stored within the volatile storage 961. By way of another example, where the non-volatile storage 962 is present and includes one or more ferromagnetic and/or solid-state disk drives, the non-volatile storage 962 may be communicatively coupled to coupling 955 through a storage controller 965b providing an appropriate interface to the non-volatile storage 962 that perhaps employs addressing of blocks of information and/or of cylinders and sectors. By way of still another example, where the removable media storage 963 is present and includes one or more optical and/or solid-state disk drives employing one or more pieces of machine-readable storage medium 969, the removable media storage 963 may be communicatively coupled to coupling 955 through a storage controller 965c providing an appropriate interface to the removable media storage 963 that perhaps employs addressing of blocks of information, and where the storage controller 965c may coordinate read, erase and write operations in a manner specific to extending the lifespan of the machine-readable storage medium 969.

One or the other of the volatile storage 961 or the non-volatile storage 962 may include an article of manufacture in the form of a machine-readable storage media on which a routine including a sequence of instructions executable by the processor component 950 to implement various embodiments may be stored, depending on the technologies on which each is based. By way of example, where the non-volatile storage 962 includes ferromagnetic-based disk drives (e.g., so-called "hard drives"), each such disk drive typically employs one or more rotating platters on which a coating of magnetically responsive particles is deposited and magnetically oriented in various patterns to store information, such as a sequence of instructions, in a manner akin to storage medium such as a floppy diskette. By way of another example, the non-volatile storage 962 may be made up of banks of solid-state storage devices to store information, such as sequences of instructions, in a manner akin to a compact flash card. Again, it is commonplace to employ differing types of storage devices in a computing device at different times to store executable routines and/or data. Thus, a routine including a sequence of instructions to be executed by the processor component 950 to implement various embodiments may initially be stored on the machine-readable storage medium 969, and the removable media storage 963 may be subsequently employed in copying that routine to the non-volatile storage 962 for longer term storage not requiring the continuing presence of the machine-readable storage medium 969 and/or the volatile storage 961 to enable more rapid access by the processor component 950 as that routine is executed.

As previously discussed, the interface 990 (possibly corresponding to the interface 150 and/or 250) may employ any of a variety of signaling technologies corresponding to any of a variety of communications technologies that may be employed to communicatively couple a computing device to one or more other devices. Again, one or both of various forms of wired or wireless signaling may be employed to enable the processor component 950 to interact with input/output devices (e.g., the depicted example keyboard 920 or printer 925) and/or other computing devices, possibly through a network or an interconnected set of networks. In recognition of the often greatly different character of multiple types of signaling and/or protocols that must often be supported by any one computing device, the interface 990 is depicted as including multiple different interface controllers 995a, 995b and 995c. The interface controller 995a may employ any of a variety of types of wired digital serial interface or radio frequency wireless interface to receive serially transmitted messages from user input devices, such as the depicted keyboard 920. The interface controller 995b may employ any of a variety of cabling-based or wireless signaling, timings and/or protocols to access other computing devices through the depicted network 999 (perhaps a network made up of one or more links, smaller networks, or perhaps the Internet). The interface 995c may employ any of a variety of electrically conductive cabling enabling the use of either serial or parallel signal transmission to convey data to the depicted printer 925. Other examples of devices that may be communicatively coupled through one or more interface controllers of the interface 990 include, without limitation, microphones, remote controls, stylus pens, card readers, finger print readers, virtual reality interaction gloves, graphical input tablets, joysticks, other keyboards, retina scanners, the touch input component of touch screens, trackballs, various sensors, a camera or camera array to monitor movement of persons to accept commands and/or data signaled by those persons via gestures and/or facial expressions, laser printers, inkjet printers, mechanical robots, milling machines, etc.

Where a computing device is communicatively coupled to (or perhaps, actually incorporates) a display (e.g., the depicted example display 980, corresponding to the display 140 and/or 240), such a computing device implementing the processing architecture 3000 may also include the display interface 985. Although more generalized types of interface may be employed in communicatively coupling to a display, the somewhat specialized additional processing often required in visually displaying various forms of content on a display, as well as the somewhat specialized nature of the cabling-based interfaces used, often makes the provision of a distinct display interface desirable. Wired and/or wireless signaling technologies that may be employed by the display interface 985 in a communicative coupling of the display 980 may make use of signaling and/or protocols that conform to any of a variety of industry standards, including without limitation, any of a variety of analog video interfaces, Digital Video Interface (DVI), DisplayPort, etc.

More generally, the various elements of the computing devices described and depicted herein may include various hardware elements, software elements, or a combination of both. Examples of hardware elements may include devices, logic devices, components, processors, microprocessors, circuits, processor components, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Further, some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still cooperate or interact with each other. Furthermore, aspects or elements from different embodiments may be combined.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit and scope of the appended claims. The detailed disclosure now turns to providing examples that pertain to further embodiments. The examples provided below are not intended to be limiting.

Example 1: An apparatus to dynamically encode video. The apparatus including a dynamic video encoder comprising a reference map generator to generate a reference map based at least in part on a channel quality corresponding to a plurality of encoded video frames to be transmitted over a channel, the reference map including indications of relationships between a plurality of video frames for purposes of encoding the plurality of video frames as the plurality of encoded video frames to increase a visual quality of the plurality of encoded video frames when transmitted over the channel and decoded.

Example 2: The apparatus of example 1, the channel quality including a visual quality score corresponding to the quality of the plurality of encoded video frames prior to being transmitted over the channel, the dynamic video encoder including a transmitter quality measurer to generate the visual quality score.

Example 3: The apparatus of example 2, the transmitter quality measurer to generate the visual quality score based on the plurality of encoded video frames.

Example 4: The apparatus of examples 2 or 3, the visual quality score being a transmitter visual quality score, the channel quality including a receiver visual quality score corresponding to the plurality of encoded video frames after being transmitted over the channel to a receiver.

Example 5: The apparatus of example 4, the dynamic video encoder to receive the receiver visual quality score from the receiver.

Example 6: The apparatus of any of examples 1 - 5, wherein the channel is a wireless transmission channel.

Example 7: The apparatus of any of examples 1 - 6, the dynamic video encoder comprising a video encoder to encode the plurality of encoded video frames from the plurality of video frames based on the reference map.

Example 8: The apparatus of any of examples 2 - 7, the channel quality including a network quality score corresponding to the quality of the channel.

Example 9: The apparatus of any of examples 5 - 7, the channel quality including a network quality score corresponding to the quality of the channel and the dynamic video encoder to receive the network quality score from the receiver.

Example 10: The apparatus of any of examples 1 - 9, the dynamic video encoder to cause the reference map top be iteratively generated.

Example 11: The apparatus of any of examples 1 - 9, the dynamic video encoder to cause the reference map to be generated based on a detected change in the channel quality.

Example 12: The apparatus of any of examples 1 - 11, the reference map defining a hierarchical relationship between the ones of the plurality of video frames.

Example 13: The apparatus of example 12, the reference map generator to generate the reference map based on a dyadic pattern or a pseudo-random pattern.

Example 14: The apparatus of any of examples 1 - 11, the reference map generator to generate the reference map based on a progressive plus 1 encoding or a pseudo-random encoding.

Example 15: The apparatus of either of claim 1-11, the reference map defining a hierarchical relationship between ones of the plurality of video frames and including inter predictive encoding to generate an interleaved transmission effect to reduce latency.

Example 16: An apparatus to decode dynamically encoded video. The apparatus including a dynamic video decoder comprising: a video decoder to decode a plurality of encoded video frames received from a transmitter over a channel into a plurality of decoded video frames; and a receiver quality measurer to generate a receiver visual quality score to transmit to the transmitter to increase the quality of the decoded video frames, the receiver visual quality score corresponding to the quality of the plurality of decoded video frames.

Example 17: The apparatus of example 16, the dynamic video decoder comprising a network quality measurer to generate a network quality score to transmit to the transmitter, the network quality score corresponding to a quality of the channel.

Example 18: An apparatus to dynamically encode and decode video. The apparatus including the apparatus of any of examples 1 - 15 and the apparatus of any of examples 16 or 17.

Example 19: A computing-implemented method for dynamically encoding video. The method including generating a reference map based at least in part on a channel quality corresponding to a plurality of encoded video frames to be transmitted over a channel, the reference map including indications of relationships between a plurality of video frames for purposes of encoding the plurality of video frames as the plurality of encoded video frames to increase a visual quality of the plurality of encoded video frames when transmitted over the channel and decoded; and encoding the plurality of video frames based on the reference map.

Example 20: The computing-implemented method of example 19, the channel quality including a visual quality score corresponding to the quality of the plurality of encoded video frames prior to being transmitted over the channel, the method comprising generating the visual quality score.

Example 21: The computing-implemented method of example 20, wherein the visual quality score is generated based on the plurality of encoded video frames.

Example 22: The computing-implemented method of examples 20 or 21, the visual quality score being a transmitter visual quality score, the channel quality including a receiver visual quality score corresponding to the plurality of encoded video frames after being transmitted over the channel to a receiver.

Example 23: The computing-implemented method of example 22, the method comprising receiving the receiver visual quality score from the receiver.

Example 24: The computing-implemented method of any of examples 19 - 23, wherein the channel is a wireless transmission channel.

Example 25: The computing-implemented method of any of examples 22 - 24, the channel quality including a network quality score corresponding to the quality of the channel.

Example 26: The computing-implemented method of example 25, the method comprising receiving the network quality score from the receiver.

Example 27: The computing-implemented method of any of examples 19 - 26, comprising iteratively generating the reference map.

Example 28: The computing-implemented method of any of examples 19 - 26, comprising detecting a change in the channel quality and generating the reference map based on the changed channel quality.

Example 29: The computing-implemented method of any of examples 19 - 28, the reference map defining a hierarchical relationship between the ones of the plurality of video frames.

Example 30: The computing-implemented method of example 29, comprising generating the reference map based on a dyadic pattern or a pseudo-random pattern.

Example 31: The computing-implemented method of any of examples 19 - 28, comprising generating the reference map based on a progressive plus 1 encoding or a pseudo-random encoding.

Example 32: The computing-implemented method of any of examples 19 - 28, the reference map defining a hierarchical relationship between ones of the plurality of video frames and including inter predictive encoding to generate an interleaved transmission effect to reduce latency.

Example 33: A computing-implemented method for dynamically decoding video. The method including decoding a plurality of encoded video frames received from a transmitter over a channel into a plurality of decoded video frames; and generating a receiver visual quality score to transmit to the transmitter to increase the quality of the decoded video frames, the receiver visual quality score corresponding to the quality of the plurality of decoded video frames.

Example 34: The computing-implemented method of example 33, comprising generating a network quality score to transmit to the transmitter, the network quality score corresponding to a quality of the channel.

Example 35: A computing-implemented method for dynamically encoding and decoding video. The method including the method of any of examples 19 - 32 and the method of any of examples 33 or 34.

Example 36: At least one machine-readable storage medium. The at least one machine-readable storage medium including instructions that when executed by a computing device, cause the computing device to perform the method of any of examples 19 - 35.

Example 35: An apparatus to dynamically decode and/or encode video. The apparatus including means for performing the method of any of examples 19 - 35.

## Claims

1. An apparatus comprising:
a dynamic video encoder comprising a reference map generator to generate a reference map based at least in part on a channel quality corresponding to a plurality of encoded video frames for transmission over a channel, the reference map to include indications of relationships between a plurality of video frames for encoding the plurality of video frames as the plurality of encoded video frames to increase a visual quality of the plurality of encoded video frames.

2. The apparatus of claim 1, the channel quality including a transmitter visual quality score corresponding to the quality of the plurality of encoded video frames prior to being transmitted over the channel, the dynamic video encoder including a transmitter quality measurer to generate the transmitter visual quality score, the channel quality further including a receiver visual quality score corresponding to the plurality of encoded video frames after being transmitted over the channel to a receiver.

3. The apparatus of either of claims 1 or 2, wherein the channel is a wireless transmission channel.

4. The apparatus of either of claims 1 - 3, the dynamic video encoder comprising a video encoder to encode the plurality of encoded video frames from the plurality of video frames based on the reference map.

5. The apparatus of either of claims 2 - 4, the channel quality including a network quality score corresponding to the quality of the channel.

6. The apparatus of either of claims 2 - 5, the channel quality including a network quality score corresponding to the quality of the channel and the dynamic video encoding application to receive the network quality score from the receiver.

7. The apparatus of either of claims 1 - 6, the dynamic video encoder to cause the reference map top be iteratively generated.

8. The apparatus of either of claims 1 - 7, the reference map defining a hierarchical relationship between ones of the plurality of video frames and including inter predictive encoding to generate an interleaved transmission effect to reduce latency.

9. An apparatus to decode dynamically encoded video comprising:
a dynamic video decoder for execution by the processor component, the dynamic video decoding application comprising:
a video decoder to decode a plurality of encoded video frames received from a transmitter over a channel into a plurality of decoded video frames;
a receiver quality measurer to generate a receiver visual quality score to transmit to the transmitter to increase the quality of the decoded video frames, the receiver visual quality score corresponding to the quality of the plurality of decoded video frames; and
a network quality measurer to generate a network quality score to transmit to the transmitter, the network quality score corresponding to a quality of the channel.

10. A computing-implemented method for dynamically encoding video comprising:
generating a reference map based at least in part on a channel quality corresponding to a plurality of encoded video frames for transmission over a channel, the reference map to include indications of relationships between a plurality of video frames for encoding the plurality of video frames to increase a visual quality of the plurality of encoded video frames; and
encoding the plurality of video frames based on the reference map.

11. The computing-implemented method of claim 10, the channel quality including a visual quality score corresponding to the quality of the plurality of encoded video frames prior to being transmitted over the channel, the method comprising generating the visual quality score.

12. The computing-implemented method of either of claims 10 - 11, the reference map defining a hierarchical relationship between ones of the plurality of video frames and including inter predictive encoding to generate an interleaved transmission effect to reduce latency.

13. A computing-implemented method for dynamically decoding video comprising:
decoding a plurality of encoded video frames received from a transmitter over a channel into a plurality of decoded video frames;
generating a receiver visual quality score to transmit to the transmitter to increase the quality of the decoded video frames, the receiver visual quality score corresponding to the quality of the plurality of decoded video frames; and
generating a network quality score to transmit to the transmitter, the network quality score corresponding to a quality of the channel.

14. At least one machine-readable storage medium comprising instructions that when executed by a computing device, cause the computing device to:
generate a reference map based at least in part on a channel quality corresponding to a plurality of encoded video frames for transmission over a channel, the reference map including indications of relationships between a plurality of video frames for encoding the plurality of video frames to increase a visual quality of the plurality of encoded video frames; and
encode the plurality of video frames based on the reference map.

15. The at least one machine-readable storage medium of claim 14, the channel quality including a network quality score corresponding to the quality of the channel received from the receiver.
